# EUROPÄISCHE PATENTANMELDUNG

(11) **EP 1 961 990 A2**
(43) Veröffentlichungstag der Anmeldung: **27.08.2008**
(21) Anmeldenummer: 07023286.3
(22) Anmeldetag: 30.11.2007
(51) Int. Cl.: F16F 9/49, F16F 9/02, F16F 9/20

(54) **Pneumatischer Stopper**

(30) Priorität: 24.02.2007 DE 102007009153
(71) Anmelder: FESTO AG & Co. KG, 73734 Esslingen (DE)
(72) Erfinder: Zschill, Sören, 01159 Dresden (DE)
(74) Vertreter: Vetter, Hans

(57) **Zusammenfassung**

Es wird ein pneumatischer Stopper zur gedämpften Abbremsung von bewegten Massen vorgeschlagen, der einen durch einen Kolben (11) in eine erste (12) und eine zweite Kammer (13) aufgeteilten Bremszylinder (10) aufweist. Vom Kolben (11) aus erstreckt sich eine ein Anschlagglied für die abzubremsende Masse bildende Anschlagkolbenstange (14) durch die erste Kammer (12) in Richtung dieser abzubremsenden Masse. Eine ein Drosselglied (29) aufweisende Verbindungsleitung (26) verbindet die beiden Kammern (12, 13), wobei der zweiten Kammer (13) pneumatische Endlagendämpfungsmittel (16, 19, 20, 22) zugeordnet sind, die den Abströmquerschnitt zur Verbindungsleitung (26) verringern, wenn der Kolben (11) beim Abbremsvorgang eine vorgegebene Abstandsposition zur Endlage erreicht hat. Durch diese zweistufige Abbremsung können auch unterschiedliche Massen sanft bis zur Anschlagposition abgebremst werden.

## Beschreibung

Die Erfindung betrifft einen pneumatischen Stopper zur gedämpften Abbremsung von bewegten Massen, beispielsweise von auf einer Rollenbahn oder einer sonstigen Transportbahn bewegten Werkstücken oder auf einem Schlitten angeordneten Werkstücken, die zu einer Verarbeitungsstation, Beladestation oder Entladestation geführt und dort abgebremst werden müssen. Die Masse des Werkstücks beziehungsweise des beladenen Schlittens kann dabei variieren, jedoch ist im Allgemeinen die Transportgeschwindigkeit konstant.

Herkömmliche hydraulische Stopper beziehungsweise Dämpfungsanschläge führen gewöhnlich zu abrupten Abbremsvorgängen, sodass die Gefahr besteht, dass die Werkstücke auf ihrer Unterlage verrutschen. Dadurch wird eine automatisierte Entnahme oder Bearbeitung verhindert.

Eine Aufgabe der vorliegenden Erfindung besteht darin, einen pneumatischen Stopper zu schaffen, der weitgehend unabhängig von der abzubremsenden Masse ein weiches Abbremsverhalten besitzt, sodass ein Verrutschen der abzubremsenden Werkstücke verhindert wird.

Diese Aufgabe wird erfindungsgemäß durch einen pneumatischen Stopper mit den Merkmalen des Anspruchs 1 gelöst.

Als besonderer Vorteil des erfindungsgemäßen Stoppers hat es sich herausgestellt, dass mit einer mechanischen Voreinstellung des Systems auch unterschiedliche Massen mit geringsten Beschleunigungswerten sanft bis zum Stillstand abgebremst werden können. Durch die Kolbenbewegung steigt der Druck in der sich verkleinernden zweiten Kammer wegproportional an, während gleichzeitig der Druck in der sich vergrößernden ersten Kammer abfällt. Durch diesen Effekt wird eine pneumatische Dämpfungskraft erzeugt, die zusätzlich zur Reibung für die Abbremsung genutzt wird. Über den Querschnitt des Drosselglieds kann die Geschwindigkeit des Luftausgleichs zwischen den Kammern eingestellt werden und dadurch das Ansprechverhalten und die Progressivität der Dämpfung. In dieser ersten Dämpfungsphase wird ein hoher Teil der kinetischen Energie der sich bewegenden Masse abgebaut. Zur Reduzierung der verbleibenden Restgeschwindigkeit dienen in vorteilhafter Weise die Endlagendämpfungsmittel. Diese können so eingestellt werden, dass der Anschlagpunkt mit einer sehr geringen Restgeschwindigkeit erreicht wird. Diese Kombination von zwei Dämpfungsverfahren macht es möglich, eine separate Dämpfungseinstellung für den Beginn der Abbremsung und für die Dämpfung der Abbremsphase vor Erreichen der Endlagenposition vorzunehmen.

Durch die in den Unteransprüchen aufgeführten Maßnahmen sind vorteilhafte Weiterbildungen und Verbesserungen des im Anspruch 1 angegebenen pneumatischen Stoppers möglich.

In einer bevorzugten Ausführung der Endlagendämpfungsmittel ist am Kolben ein sich in die zweite Kammer erstreckendes zylindrisches Dämpfungsglied vorgesehen, wobei eine zylindrische Aufnahme für dieses Dämpfungsglied mit entsprechendem Querschnitt am dem Kolben gegenüberstehenden Endlagenbereich des Bremszylinders angeordnet ist, die bei nicht eingeführtem Dämpfungsglied die Verbindung mit der Verbindungsleitung herstellt, und wobei eine Bypass-Drosselleitung die zweite Kammer mit der Verbindungsleitung verbindet. Durch die Wahl des Querschnitts der Bypass-Drosselleitung kann dabei die Endlagendämpfung eingestellt beziehungsweise optimiert werden. Vorteilhafterweise kann dabei auch zur Erreichung einer größeren Variabilität eine variabel einstellbare Bypass-Drosselleitung, also ein variabel einstellbarer Abströmquerschnitt, vorgesehen werden.

Mit der einseitig angebrachten Anschlagkolbenstange am Kolben sind die für den Druck wirksamen Flächen auf den beiden Seiten des Kolbens unterschiedlich, sodass sich der Kolben in Richtung einer sich verkleinernden ersten Kammer bewegt, wenn die sich auf Grund dieser unterschiedlichen Flächen ergebende Differenzkraft größer als die Reibungskraft ist. Um dies zu verhindern, kann eine Kompensationskolbenstange am Kolben angebracht sein, die sich durch die zweite Kammer hindurch erstreckt und deren Querschnitt dem der Anschlagkolbenstange entspricht. Dadurch sind die Druckverhältnisse zu beiden Seiten des Kolbens in dessen nicht bewegtem Zustand ausgeglichen, und der Kolben verharrt in seiner Anschlagstellung.

Zur Druckversorgung des pneumatischen Stoppers ist die Verbindungsleitung zweckmäßigerweise über ein insbesondere als Rückschlagventil ausgebildetes Ventil an eine pneumatische Druckquelle angeschlossen, sodass das pneumatische System mit dem gewünschten Arbeitsdruck versorgt werden kann, ohne dass bei einer Druckerhöhung infolge des Abbremsvorgangs Fluid wieder zur Druckquelle zurückgelangen kann.

Um einen gewünschten Arbeitsdruck im pneumatischen System zu erzeugen, sind zweckmäßigerweise Mittel zur Einstellung des Drucks vorgesehen, insbesondere ein Druckminderer, der in Reihe zu dem an die Druckquelle angeschlossenen Ventil angeordnet ist.

Zur Rückführung des Kolbens von seiner Anschlagstellung in die Ausgangsstellung dient in vorteilhafter Weise ein in die Verbindungsleitung geschaltetes Ventil, das zur Entlüftung der ersten Kammer dient. Ein dadurch erreichtes günstiges Temperaturverhalten ist als weiterer Vorteil zu nennen. Die kinetische Energie wird beim Abbremsvorgang in Wärme umgesetzt. Nach jedem Dämpfungsvorgang wird jedoch der Hauptteil des Fluids beim Rückstellprozess durch Entlüftung der ersten Kammer an die Umgebung abgegeben. Damit wird auch die aufgenommene Wärmeenergie überwiegend an die Umgebung abgeleitet.

Auch das Drosselglied in der Verbindungsleitung kann zweckmä-ßigerweise einstellbar ausgebildet sein, um das System hinsichtlich der Anfangsdämpfungseigenschaften zu optimieren.

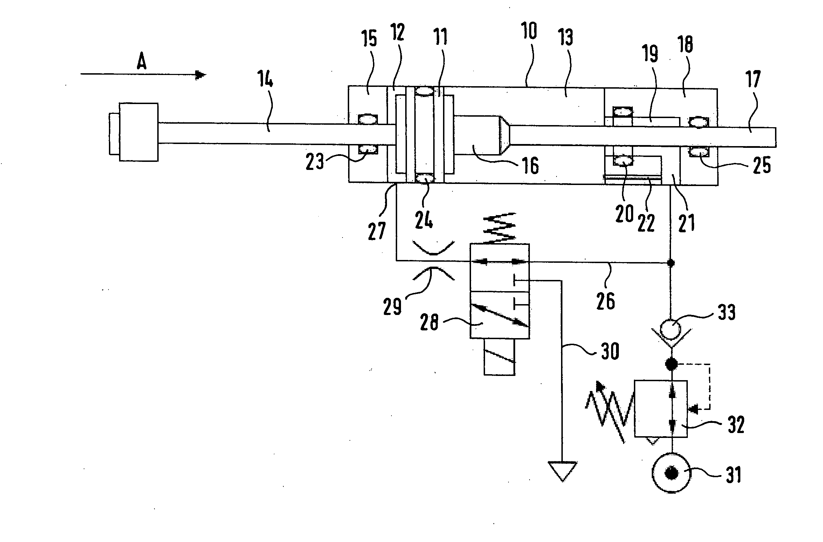

Ein Ausführungsbeispiel der Erfindung ist in der Zeichnung dargestellt und in der nachfolgenden Beschreibung näher erläutert. Die einzige Figur zeigt eine schematische schaltungsmäßige Darstellung eines pneumatischen Stoppers als Ausführungsbeispiel der Erfindung.

Der in der einzigen Figur dargestellte pneumatische Stopper dient dazu, an Fertigungsstraßen, wie Rollenbahnen und dergleichen, sich dort bewegende Werkstücke oder auf Schlitten angeordnete Werkstücke an Bearbeitungsstationen, Beladestationen und Entladestationen vor jeweiligen Anschlagpositionen sanft abzubremsen. Um das Werkstück oder den Schlitten nach einem Bearbeitungsvorgang oder Be- oder Entladevorgang wieder weiterbewegen zu können, wird der Stopper in an sich bekannter Weise durch ein fluidisches oder elektrisches Stellglied aus der Bewegungsbahn herausgezogen, um anschließend wieder in die Bewegungsbahn eingefahren zu werden, damit das nächste Werkstück oder der nächste Schlitten wieder in der entsprechenden Weise sanft abgebremst werden kann.

Der pneumatische Stopper besteht aus einem pneumatischen Bremszylinder 10, dessen Innenraum durch einen Kolben 11 in eine erste Kammer 12 und eine zweite Kammer 13 unterteilt ist. Vom Kolben 11 aus erstreckt sich eine Anschlagkolbenstange 14 durch die erste Kammer 12 und einen ersten Zylinderdeckel 15 hindurch in Richtung der sich aus der Bewegungsrichtung A annähernden abzubremsenden Masse. Von der entgegengesetzten Seite des Kolbens 11 aus erstrecken sich ein zylindrisches Dämpfungsglied 16 und eine sich daran anschließende Kompensationskolbenstange 17 in die Gegenrichtung durch die zweite Kammer 13 und einen zweiten Zylinderdeckel 18 an der dem ersten Zylinderdeckel 15 entgegengesetzten Endposition des Bremszylinders 10 hindurch. Der Querschnitt der Anschlagkolbenstange 14 entspricht dabei dem Querschnitt der Kompensationskolbenstange 17.

Der zweite Zylinderdeckel 18 weist eine konzentrische, zylindrische Aufnahme 19 für das Dämpfungsglied 16 auf und besitzt einen entsprechenden Querschnitt. Eine Ringdichtung 20 um die Aufnahme 19 herum sorgt dafür, dass die mit einem pneumatischen, in radialer Richtung zur Außenseite des Bremszylinders 10 verlaufenden Anschluss 21 versehene Aufnahme 19 beim Eintauchen des Dämpfungsglieds 16 abgedichtet wird, sodass der Anschluss 21 nicht mehr über die Aufnahme 19 mit der zweiten Kammer 13 verbunden ist. Die Be- und Entlüftung der zweiten Kammer 13 erfolgt dann über eine Bypass-Drosselleitung 22, die die zweite Kammer 13 direkt mit dem pneumatischen Anschluss 21 verbindet.

Ringdichtungen 23 bis 25 in den Zylinderdeckeln 15, 18 und am Kolben 11 sorgen für die Abdichtung der beiden Kammern 12, 13.

Der pneumatische Anschluss 21 ist über eine Verbindungsleitung 26 mit einem pneumatischen Anschluss 27 an der ersten Kammer 12 verbunden, wobei in diese Verbindungsleitung 26 die Reihenschaltung eines Ventils 28 mit einem Drosselglied 29 geschaltet ist. Das Ventil 28 verbindet in seiner ersten, dargestellten Schaltstellung die beiden Anschlüsse 21, 27 beziehungsweise die beiden Kammern 12, 13 miteinander und trennt in seiner zweiten Schaltstellung diese Verbindung auf, wobei gleichzeitig die erste Kammer 12 mit einer Abluftleitung 30 beziehungsweise mit der Umgebung verbunden wird.

Eine Druckluftquelle 31 ist über einen Druckminderer 32 zur Einstellung des Arbeitsdrucks und ein in Reihe dazu geschaltetes Rückschlagventil 33 mit dem pneumatischen Anschluss 21 verbunden.

Anstelle eines Druckminderers 32 kann auch eine andere Druckeinstellvorrichtung vorgesehen sein, und anstelle eines Rückschlagventils 33 kann auch ein Absperrventil treten, das jeweils geöffnet wird, um den Arbeitsdruck im pneumatischen Stopper wieder herzustellen.

Die Bypass-Drosselleitung 22 und das Drosselglied 29 können auch mit einstellbarem Querschnitt ausgeführt sein, um die Dämpfungs- beziehungsweise Abbremsgeschwindigkeiten individuell einstellen zu können.

Wenn eine sich in der Bewegungsrichtung A bewegende Masse oder ein sich bewegender Wagen die Anschlagkolbenstange 14 erreicht, wird durch die Bewegungsenergie der Kolben 11 in Richtung des zweiten Zylinderdeckels 18 aus seiner Ausgangsstellung heraus in Richtung des zweiten Zylinderdeckels 18 verschoben. Durch die Kolbenbewegung steigt der Druck in der sich verkleinernden zweiten Kammer 13 wegproportional an, während der Druck in der sich vergrößernden ersten Kammer 12 abfällt. Durch diesen Effekt wird eine pneumatische Dämpfungskraft gegen die Bewegungsrichtung der Masse beziehungsweise des Kolbens 11 erzeugt, die durch Wahl oder Einstellung des Querschnitts des Drosselglieds 29 vorgebbar ist. In dieser ersten Dämpfungsphase wird ein großer Teil der kinetischen Energie der Masse sanft abgebaut.

Erreicht das Dämpfungsglied 16 die zylindrische Aufnahme 19 beziehungsweise deren Ringdichtung 20, kann das Fluid nicht mehr über die Aufnahme 19 aus der zweiten Kammer 13 austreten, sondern nunmehr über die Bypass-Drosselleitung 22 mit wesentlich kleinerem Querschnitt. Durch diese Endlagendämpfungseinrichtung wird nun die verbleibende Restgeschwindigkeit noch abgebaut bis zur Erreichung der Anschlagposition mit geringster Restenergie. Der Querschnitt der Bypass-Drosselleitung 22 wird dabei so gewählt oder eingestellt, dass dieser Aufschlagpunkt mit möglichst geringer Restgeschwindigkeit erreicht wird.

Der Kolben 11 verbleibt nun in dieser Anschlagposition, bis das Ventil 28 umgeschaltet wird. Nun wird die erste Kammer 12 entlüftet, während die zweite Kammer 13, die mit der Druckluftquelle 31 verbunden ist, über das Rückschlagventil 33 mit Druckluft versorgt wird, sodass sich der Kolben 11 wieder in die Ausgangsposition zurückbewegt. Dort wird das Ventil 28 wieder in die in der Figur dargestellte Stellung umgeschaltet, sodass beide Seiten des Kolbens 11 mit Druck beaufschlagt sind und der Kolben dadurch in dieser Ausgangsposition verbleibt.

Bei einer Ausführung, bei der die Kompensationskolbenstange 17 entfällt, wird der Kolben mit einer gewissen Kraft in der Ausgangsposition gehalten, da die wirksame Kolbenfläche der zweiten Kammer 13 dann größer als in der ersten Kammer 12 ist. Bei der Dämpfungsbewegung muss neben der Reibungskraft auch diese zusätzliche Kraft überwunden werden. Ist die Anschlagposition erreicht, so würde der Kolben nach vollständiger Abbremsung wieder durch diese Differenzkraft in die Ausgangsposition selbstständig zurückgefahren werden, sofern diese Differenzkraft größer als die Reibungskraft ist. Durch die Verwendung der Kompensationskolbenstange 17 kann dieses Problem nicht auftreten.

Die gewünschte Dämpfungskraft hängt neben der Dimensionierung oder Einstellung des Drosselglieds 29 und der Bypass-Drosselleitung 22 noch von der Dimensionierung des Bremszylinders 10 selbst ab, insbesondere von dessen Querschnitt, wobei auch noch die Reibungskraft in die Überlegung einbezogen werden muss. Die maximale Kolbenkraft sollte im Bereich der Maximalgrenze der zulässigen Dämpfungskraft liegen. Ein typischer Wert ist zwischen 200 N und 600 N. Beim erfindungsgemäßen Dämpfungsprinzip ist die pneumatische Bremskraft üblicherweise geringer als die statische Maximalkraft des Bremszylinders 10. Daher sollte bei der Zylinderauswahl eine ausreichende Reserve eingeplant werden. Zu diesem Zweck wird beispielsweise eine effektive Bremskraft von 33 % der statischen Kraft gewählt. Diese sollte wiederum größer sein als die minimal erforderliche Bremskraft.

Durch die durchgehende Kolbenstange (Anschlagkolbenstange 14 und Kompensationskolbenstange 17) besitzt der Kolben 11 drei Lagerstellen, die zueinander fluchten müssen. Fertigungsbedingte Toleranzen beeinflussen bei dieser Konstellation das Reibungsverhalten nicht unerheblich. Reibungsgeminderte Zylindertypen zeigen ein verbessertes Laufverhalten der Zylinder. Neben einem geänderten Schmiermedium unterscheiden sich diese Zylinder vor allem im Dichtungswerkstoff. Sehr starke Auswirkungen besitzen diese Maßnahmen auf das Kraftreibungs- und Losbrechverhalten, jedoch ist auch eine Absenkung des Gleitreibungsverhaltens feststellbar. Hierdurch kann der Betriebsdruck verringert werden, was zu einer verringerten Dichtungsreibung führt. Unter diesen Randbedingungen können feste Drosseleinstellungen für die Dämpfungscharakteristik gefunden werden, mit denen das komplette Spektrum an Nutzmassen abgebremst werden kann.

## Patentansprüche

1. Pneumatischer Stopper zur gedämpften Abbremsung von bewegten Massen, mit einem durch einen Kolben (11) in eine erste (12) und eine zweite Kammer (13) aufgeteilten Bremszylinder (10), mit einer sich vom Kolben (11) aus durch die erste Kammer (12) in Richtung der abzubremsenden Masse erstreckenden und für diese ein abbremsendes Anschlagglied bildenden Anschlagkolbenstange (14) und mit einer die beiden Kammern (12, 13) verbindenden, ein Drosselglied (29) aufweisenden Verbindungsleitung (26), wobei der zweiten Kammer (13) pneumatische Endlagendämpfungsmittel (16, 19, 20, 22) zugeordnet sind, die den Abströmquerschnitt zur Verbindungsleitung (26) verringern, wenn der Kolben (11) beim Abbremsvorgang eine vorgegebene Abstandsposition zur Endlage erreicht hat.

2. Stopper nach Anspruch 1, **dadurch gekennzeichnet, dass** die Endlagendämpfungsmittel ein am Kolben (11) angeordnetes, sich in die zweite Kammer (13) erstreckendes zylindrisches Dämpfungsglied (16) aufweisen, wobei eine zylindrische Aufnahme (19) für dieses Dämpfungsglied (16) mit entsprechendem Querschnitt an dem dem Kolben (11) gegenüberstehenden Endlagenbereich (18) des Bremszylinders (10) angeordnet ist, die bei nicht eingeführtem Dämpfungsglied (16) die Verbindung mit der Verbindungsleitung (26) herstellt, und dass eine Bypass-Drosselleitung (22) die zweite Kammer (13) mit der Verbindungsleitung (26) verbindet.

3. Stopper nach Anspruch 1 oder 2, **dadurch gekennzeichnet, dass** sich vom Kolben (11) aus eine Kompensationskolbenstange (17) durch die zweite Kammer (13) hindurcherstreckt, deren Querschnitt dem der Anschlagkolbenstange (14) entspricht.

4. Stopper nach einem der vorhergehenden Ansprüche, **dadurch gekennzeichnet, dass** die Verbindungsleitung (26) über ein insbesondere als Rückschlagventil ausgebildetes Ventil (33) an eine pneumatische Druckquelle (31) angeschlossen ist.

5. Stopper nach einem der vorhergehenden Ansprüche, **dadurch gekennzeichnet, dass** Mittel (32) zur Einstellung des pneumatischen Drucks vorgesehen sind.

6. Stopper nach Anspruch 4 und 5, **dadurch gekennzeichnet, dass** als Mittel (32) zur Einstellung des pneumatischen Drucks ein Druckminderer in Reihe zu dem an der Druckquelle (31) angeschlossenen Ventil (33) angeordnet ist.

7. Stopper nach einem der vorhergehenden Ansprüche, **dadurch gekennzeichnet, dass** ein in die Verbindungsleitung (26) geschaltetes Ventil (28) zur Rückführung des Kolbens (11) in seine Ausgangsstellung durch Entlüftung der ersten Kammer (12) ausgebildet ist, wobei der Kolben (11) bei ausgefahrener Anschlagkolbenstange (14) diese Ausgangsstellung einnimmt.

8. Stopper nach einem der vorhergehenden Ansprüche, **dadurch gekennzeichnet, dass** das Drosselglied (29) und/oder der verringerte Abströmquerschnitt der Bypass-Drosselleitung (22) einstellbar ausgebildet ist.
